# EUROPEAN PATENT APPLICATION

(11) **EP 1 569 210 A2**
(43) Date of publication of application: **31.08.2005**
(21) Application number: 05250927.0
(22) Date of filing: 18.02.2005
(51) Int. Cl.: G11B 7/09

(54) **Method and system for recording/reproducing data to/from Information Storage Medium**

(30) Priority: 28.02.2004 KR 2004013816
(71) Applicant: SAMSUNG ELECTRONICS CO., LTD., Gyeonggi-do (KR)
(72) Inventor: Lee, Kyung-geun, 229-1006 Sibeomdanji Woosung Apt., Seongnam-si, Gyeonggi-do (KR); Shim, Jae-seong, 104-306 Sunkyung Apt., Anyang-si, Gyeonggi-do (KR)
(74) Representative: Waddington, Richard

(57) **Abstract**

A method of and system for recording/reproducing data to/from an information storage medium (D) having at least a recording layer with a plurality of grooves and lands. A groove signal is read from the information storage medium (D) and groove recording or land recording is recognized according to the read groove signal. Data is recorded and/or reproduced based on the recognized information. The method and system determine groove recording or land recording from a groove wobble signal, thereby eliminating a need to separately record tracking information or perform tracking in order to obtain the tracking information.

## Description

The present invention relates to a method of and a system for recording/reproducing data to/from an information storage medium by reading information about land or groove recording from a groove signal.

Optical disks are classified into compact disks (CDs), digital versatile disks (DVDs), and mini disks (MDs) with a diameter less than 65 mm depending on data recording capacity. Furthermore, disks with recording capacity of over 20 GB are currently being developed. Optical disks are also classified into read-only disks such as CD-Read - Only Memory (ROM) and DVD-ROM and rewritable disks such as CD±R/RW, DVD±R/RW, and DVD-Random Access Memory (RAM). While data can only be recorded to CD-R and DVD-R disks once, data can be recorded/reproduced to/from CD-RW and DVD-RW disks up to about 1,000 times and to and/from DVD-RAM disk several hundreds of thousands of times. For read-only or write-once disks, data is recorded in the form of pits. For rewritable disks with a recording layer coated with a phase change material, data is recorded by phase change.

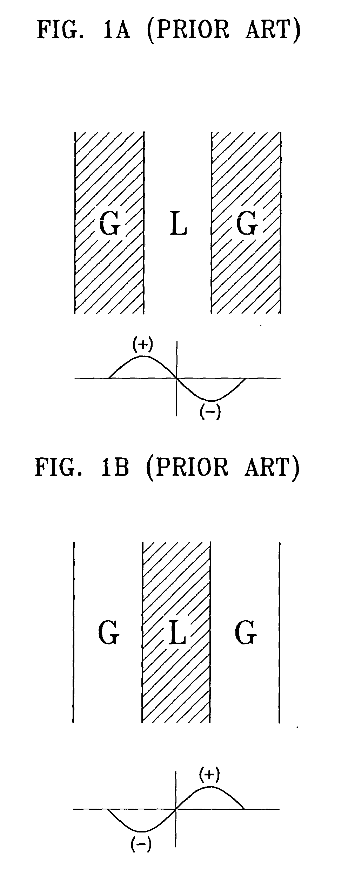

An optical pickup in an apparatus for recording/reproducing to/from an optical disk reads user data by precisely following a track where user data is recorded and receiving a laser beam reflected from the track. A signal used for the pickup to follow the track is called a tracking signal. The tracking signal is obtained by adding or subtracting signals obtained with laser beams received by a plurality of partitioned light-receiving portions in a photodiode. The tracking signal is symmetric and has the form of an S-curve with the left and right curves having opposite polarities. The polarity of the tracking signal varies depending on the type of an optical disk, i.e., physical characteristics of a recording layer such as physical geometries of pits and tracks. For example, FIGs. 1A and 1B show tracks in which groove tracks G and land tracks L are arranged opposite to each other. Referring to FIG. 1A, data is recorded onto a groove track G and the polarity of a tracking signal changes from positive to negative. On the other hand, referring to FIG. 1B, data are recorded onto a land track L and the polarity of a tracking signal changes from negative to positive. The way of handling the tracking signal varies according to the way that the polarity changes.

In particular, there are two types of write-once information storage media: an information storage medium having information recorded on a land track and an information storage medium having information recorded on a groove track. For example, for an information storage medium made of organic pigment, data must be recorded on land tracks because a width of a groove track decreases as the recording capacity decreases so it is difficult to properly form a recording layer on a groove track during spin coating.

Since the polarity of the tracking signal varies depending on the physical characteristics of a recording layer or the type of a track on which information is recorded, a method of determining the polarity of the tracking signal is needed. One approach is to store information about the polarity of the tracking signal in a predetermined region on an information storage medium and reproduce data by reading the information. However, since this information cannot be read until a drive performs tracking, it is not usefully used in determining the polarity of the tracking signal before performing tracking. Thus, there is a need for a method of providing a drive with information about tracking signal polarity before performing tracking in order to read information about tracking signal polarity after inserting the information storage medium into the drive.

According to an aspect of the present invention there is provided a method of and a system for recording/reproducing data to/from an information storage medium, which allow a drive to recognize information about whether data is recorded on a groove track or a land track before performing tracking.

According to the present invention there is provided an apparatus and method as set forth in the appended claims. Preferred features of the invention will be apparent from the dependent claims, and the description which follows.

According to an aspect of the present invention, there is provided a method of recording/reproducing data to/from an information storage medium having at least a recording layer with a plurality of grooves and lands, including: reading a groove signal from the information storage medium; recognizing groove recording or land recording according to the read groove signal; and recording and/reproducing data based on the recognized information. The groove signal may be read from a groove wobble and carries information about a disk region, an address, or a predetermined pattern of the information storage medium.

According to another aspect of the present invention, there is provided a system for recording/reproducing data to/from a recordable information storage medium having a plurality of grooves and lands including: a pickup irradiating a laser beam on the information storage medium; a recording/reproducing signal processor processing a groove signal according to a signal received from the pickup; and a controller determining groove recording or land recording from the groove signal and controlling the pickup to record/reproduce data on/from the groove or the land.

Additional aspects and/or advantages of the invention will be set forth in part in the description which follows and, in part, will be obvious from the description, or may be learned by practice of the invention.

For a better understanding of the invention, and to show how embodiments of the same may be carried into effect, reference will now be made, by way of example, to the accompanying diagrammatic drawings in which:
FIGs. 1A and 1B show changes in the polarity of a tracking signal when data is recorded on groove tracks and land tracks, respectively;
FIG. 2A is a graph illustrating changes in amplitudes of differential phase detection (DPD) signal and an RF signal with respect to time in an information storage medium having data recorded thereon as indented pits;
FIG. 2B is a graph illustrating changes in amplitudes of a differential phase detection (DPD) signal and an RF signal with respect to time, for an information storage medium having data recorded thereon as embossed pits;
FIG. 3A is a graph illustrating a change in amplitude of a push-pull signal with respect to time for an information storage medium having data recorded thereon as indented pits;
FIG. 3B is a graph illustrating a change in amplitude of a push-pull signal with respect to time, for an information storage medium having data recorded thereon as embossed pits;
FIG. 4 shows a change in tracking signal polarity on an information storage medium having data recorded thereon by bi-phase recording;
FIG. 5 is a flowchart illustrating a method of recording/reproducing data to/from an information storage medium according to an embodiment of the present invention;
FIG. 6 is a diagram for explaining a method of recording/reproducing data to/from an information storage medium according to an embodiment of the present invention; and
FIG. 7 schematically shows a system for recording/reproducing data to/from an information storage medium according to an embodiment of the present invention.

Reference will now be made in detail to the present embodiments of the present invention, examples of which are illustrated in the accompanying drawings, wherein like reference numerals refer to the like elements throughout. The embodiments are described below in order to explain the present invention by referring to the figures.

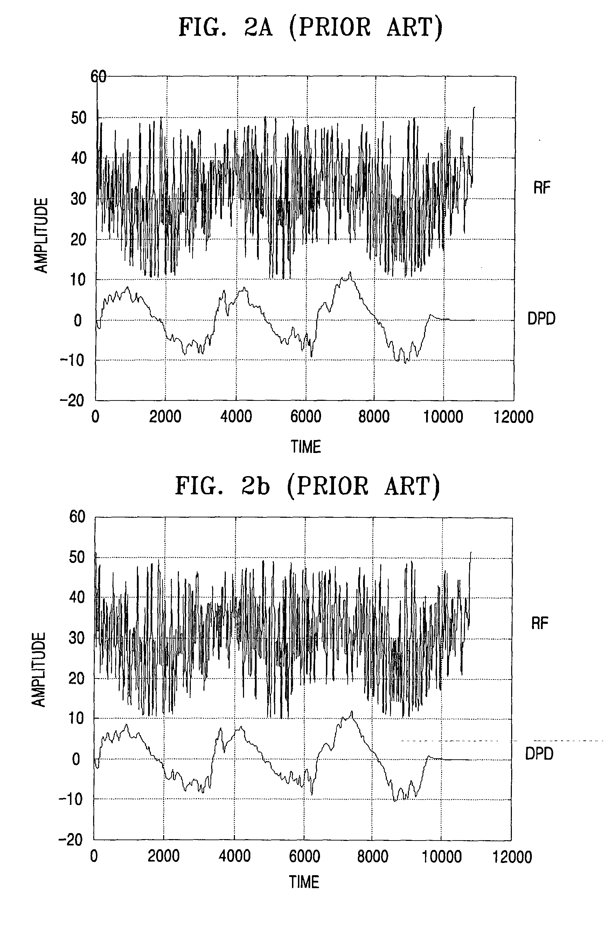

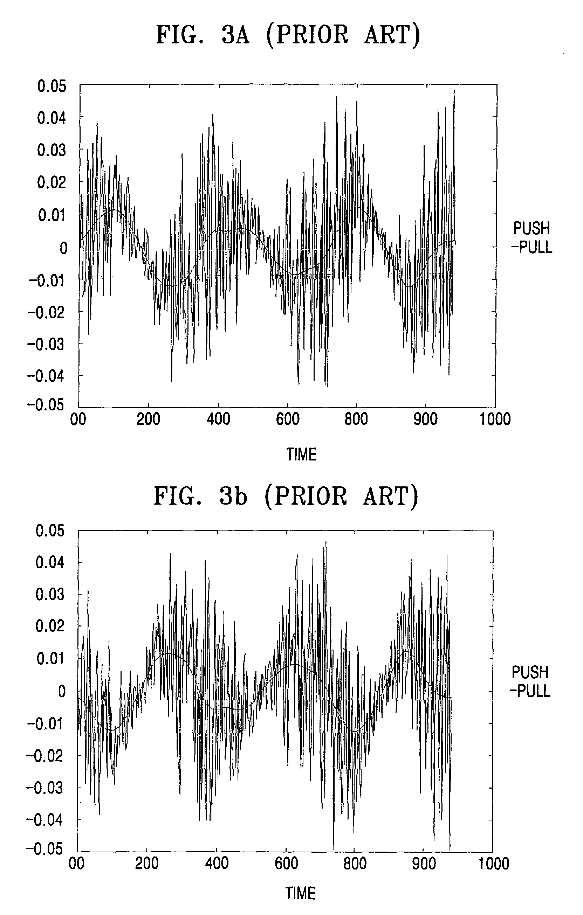

Prior to describing a method of recording/reproducing data to/from an information storage medium according to present invention, the results of simulations performed to identify a differential phase detection (DPD) signal and a push-pull signal associated with tracking will now be described with reference to FIGs. 2A, 2B, 3A, and 3B. Table 1 shows simulation conditions.

**Table 1**

| | |
|---|---|
| LD wavelength (λ) | 400 nm |
| Objective numerical aperture (NA) | 0.85 |
| Groove structure | Track pitch: 0.32 µm Pit length: λ/4 |
| Minimum mark length | 0.149 µm |
| Modulation | Run-length limited (RLL) (1,7) |

RLL in Table 1 denotes a modulation technique that limits the number of consecutive 0's between successive 1's. RLL (m,k) specifies a minimum of d and a maximum of k consecutive 0's between adjacent 1's. For example, RLL (1,7) indicates that there must be at least 1 and at most 7 0's between 1's. According to the RLL (1,7) modulation, when m=1, data of 101010 is recorded, and a mark of length 2T is formed between adjacent 1's. When m=7, data of "10000000100000001" is recorded, and a mark of length 8T is formed between adjacent 1's. Here, T denotes the minimum mark length, i.e., the minimum pit length. Thus, in the RLL (1,7) modulation method, data is recorded as marks and spaces of length 2T to 8T.

FIGs. 2A and 2B show amplitudes of a differential phase detection (DPD) signal and an RF signal when data is recorded as indented pits and embossed pits, respectively, on an information storage medium. Referring to FIGs. 2A and 2B, the polarity of the DPD signal does not vary according to the geometry of pits.

FIGs. 3A and 3B show amplitudes of push-pull signals when data is recorded as indented pits and embossed pits, respectively, on an information storage medium. Referring to FIGs. 3A and 3B, the polarity of the push-pull signal varies according to the geometry of pits. Thus, information on the polarity of the tracking signal that changes according to the geometry of pits is required when reproducing data or performing tracking using a push-pull signal.

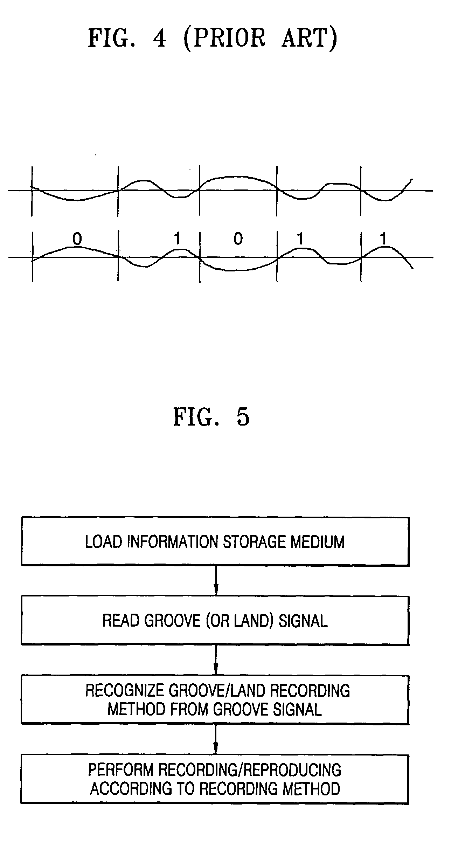

Because of the tracking signal with varying polarities, it is difficult to normally recognize reproduced data. FIG. 4 shows an example of a method of recording data using groove wobbles when polarities of a push-pull signal vary. When the polarity of the push-pull signal changes according to bi-phase recording as shown in FIG. 4, it may be impossible to reproduce a signal. Thus, in this case, it is necessary to provide information on the polarity of a push-pull signal or information about a recording area before recording/reproducing. The information on a recording area represents whether data is recorded on a groove G or a land L.

To meet this need, an aspect of the present invention provides a method of recording/reproducing data to/from an information storage medium by obtaining tracking information without performing tracking. That is, obtaining tracking information prior to performing tracking.

Referring to FIG. 5, a method of recording/reproducing data to/from an information storage medium according to an embodiment of the present invention includes reading a groove signal from a groove or a land after loading the information storage medium into a recording/reproducing system and recording data on the groove when the groove signal is normally read and recording data on the land when the groove signal is not normally read. The groove signal may carry information on a disk region, an address, or a predetermined pattern. The signal read from the groove may be a groove wobble signal that is extracted from a push-pull signal. When the groove wobble signal is read along a land track, no signal is read without reversing the tracking signal polarity. However, when a land wobble signal recorded on the land track is read along the groove track, no wobble signal is read, either. An aspect of the present invention uses these characteristics to determine groove recording or land recording according to whether a groove wobble signal or a land wobble signal is read.

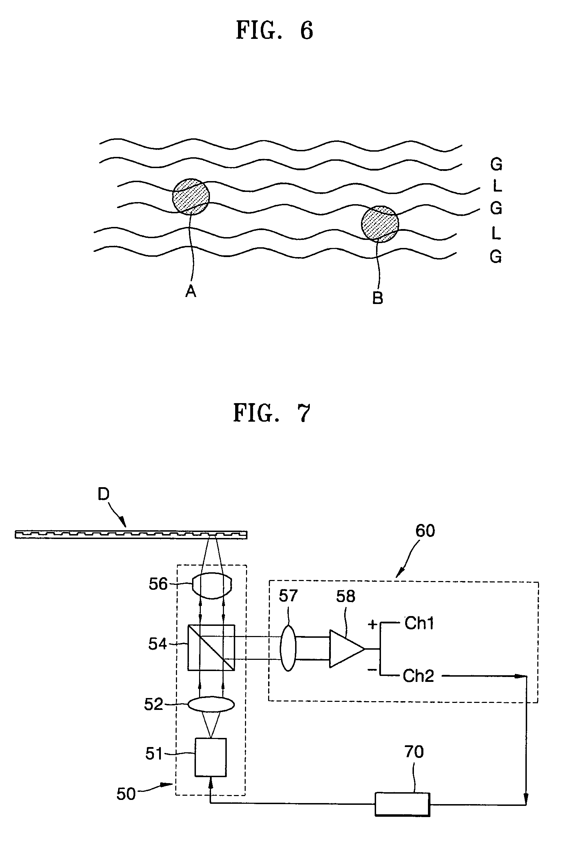

FIG. 6 is a diagram for explaining a method of recording/reproducing data to/from an information storage medium according to an embodiment of the present invention. Referring to FIG. 6, when a laser beam A is used to read a groove wobble signal and the groove wobble signal is normally read, it indicates that the signal is recorded on a groove track. On the other hand, when no signal is read, it means the signal is recorded on a land track. Furthermore, when a laser beam B is used to read a land wobble signal and the land wobble signal is normally read, it indicates that the signal is recorded on a land track. However, when no signal is read, it indicates the signal is recorded on a groove track. Based on the tracking information obtained in this way, user data is recorded/reproduced to/from the information storage medium. As described above, in an aspect of the present invention, the method determines the type of recording (groove recording or land recording) without recording tracking information at a separate region on the information storage medium or performing tracking.

FIG. 7 schematically shows a system for recording/reproducing data to/from an information storage medium D according to an embodiment of the present invention. Referring to FIG. 7, the system includes a pickup 50, a recording/reproducing signal processor 60, and a controller 70. The pickup 50 includes a laser diode 51 that emits light, a collimating lens 52 that collimates the light emitted by the laser diode 51 into a parallel beam, a beam splitter 54 that changes the propagation path of the parallel beam, and an objective lens 56 that focuses the parallel beam passing through the beam splitter 54 onto the information storage medium D.

The beam is then reflected from the information storage medium D back to the beam splitter 54 and is sent to a photodetector 57 (such as a quadrant photodetector). The beam received by the photodetector 57 is converted into an electrical signal by an operational circuit 58 and output as an RF or sum signal through channel Ch1 and as a push-pull signal through a differential signal channel Ch2.

The controller 70 allows the beam to be irradiated from the pickup 50 and reads a signal read from a groove through the recording/reproducing signal processor 60. In this case, the beam is reflected from the information storage medium D back to the objective lens 56 and the beam splitter 54 and is sent to the photodetector 57. The beam input to the photodetector 57 is then converted into an electrical signal by the operational circuit 58 and output as an RF signal. The controller 70 recognizes groove recording or land recording depending on whether the signal is normally output from the recording/reproducing signal processor 60. Based on a determination result, the controller 70 also determines whether data will be recorded on a groove or a land and controls the pickup 50 according to the result.

A method and system for recording/reproducing data to/from an information storage medium according to an aspect of the present invention are able to identify groove recording or land recording from a groove wobble signal, thereby eliminating the need to separately record tracking information or perform tracking in order to obtain the tracking information.

While not required in all aspects, it is understood that all or portions of the method disclosed herein may be implemented as computer software encoded on at least one computer readable media to be implemented by one or more computers.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of recording/reproducing data to/from an information storage medium (D) having at least a recording layer with a plurality of grooves and lands, the method comprising:
reading a groove signal from the information storage medium (D);
recognizing and distinguishing between groove recording and land recording according to the read groove signal; and
recording/reproducing data using the recognized one of the groove and land recording based on the recognized information.

2. The method of claim 1, wherein the groove signal is read from a groove wobble.

3. The method of claim 1 or 2, wherein the groove signal is information about a disk region, an address, or a predetermined pattern of the information storage medium.

4. A system for recording/reproducing data to/from a recordable information storage medium (D) having a plurality of grooves and lands, the system comprising:
a pickup (50) operable to irradiate a beam on the information storage medium (D);
a recording/reproducing signal processor (60) operable to process a groove signal according to a signal received from the pickup (50); and
a controller (70) operable to determine and distinguish between groove recording and land recording based on the processed groove signal and operable to control the pickup (50) to record/reproduce data on/from the groove or the land according to the distinguished one of the groove and land recording.

5. The system of claim 4, wherein the groove signal is read from a groove wobble.

6. The system of claim 4 or 5, wherein the groove signal is information about a disk region, an address or a predetermined pattern of the recordable information storage medium (D).
